(19) Europäisches Patentamt
European Patent Office
Office européen des brevets

(11) **EP 4 756 921 A1**

(12) **EUROPEAN PATENT APPLICATION**
published in accordance with Art. 153(4) EPC

(43) Date of publication:
**10.06.2026 Bulletin 2026/24**

(21) Application number: **24848970.0**

(22) Date of filing: **22.07.2024**

(51) International Patent Classification (IPC):
*H01M 4/525* (2010.01)

(52) Cooperative Patent Classification (CPC):
**H01M 4/525; Y02E 60/10**

(86) International application number:
**PCT/JP2024/026080**

(87) International publication number:
**WO 2025/028315 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.07.2023 JP 2023123179**

(71) Applicant: **Panasonic Intellectual Property
Management Co., Ltd.
Kadoma-shi, Osaka 571-0057 (JP)**

(72) Inventors:
• **MASUMOTO, Kaisei
Kadoma-shi, Osaka 571-0057 (JP)**
• **INOUE, Katsuya
Kadoma-shi, Osaka 571-0057 (JP)**
• **OGASAWARA, Takeshi
Kadoma-shi, Osaka 571-0057 (JP)**

(74) Representative: **Novagraaf International SA
Chemin de l'Echo 3
1213 Onex, Geneva (CH)**

(54) **MEASUREMENT METHOD AND MEASUREMENT DEVICE FOR MEASURING PARTICLE BREAKING STRENGTH OF POSITIVE ELECTRODE ACTIVE MATERIAL FOR NONAQUEOUS ELECTROLYTE SECONDARY BATTERY**

(57) Provided is a measurement method and a measurement device capable of reducing variation in measurement values of particle breaking strength of a positive electrode active material for a nonaqueous electrolyte secondary battery. A measurement method for measuring particle breaking strength of a positive electrode active material for a nonaqueous electrolyte secondary battery, according to one aspect of the present disclosure, comprises measuring particle breaking strength of a positive electrode active material in an atmosphere in which the dew point is kept at 0°C or less. A measurement device for measuring particle breaking strength of a positive electrode active material for a nonaqueous electrolyte secondary battery, according to one aspect of the present disclosure, has a mechanism for measuring particle breaking strength of a positive electrode active material in a state in which the dew point of a sample exposure region is kept at 0°C or less.

Figure 1

**Description**

TECHNICAL FIELD

The present disclosure relates to a measuring method and measuring device for a particle fracture strength of a positive electrode active material for a non-aqueous electrolyte secondary battery.

BACKGROUND ART

In recent years, non-aqueous electrolyte secondary batteries such as lithium-ion batteries have been widely used in use requiring a high capacity, such as on-board use and power storage use. Since performance of a positive electrode active material included in a positive electrode greatly affects capacity enhancement, evaluation of characteristics of the positive electrode active material is important.

A particle fracture strength of the positive electrode active material is an important physical property value relating to rollability during production of the positive electrode, a battery lifetime, and the like, and desired to be accurately quantified. The particle fracture strength of the positive electrode active material is commonly measured based on "Test method of fracture and deformation strength of a fine particle", determined in JIS Z8844-2019. Patent Literatures 1 and 2 describe that the particle fracture strength is measured by using a micro-compression testing machine.

CITATION LIST

PATENT LITERATURE

PATENT LITERATURE 1: Japanese Unexamined Patent Application Publication No. 2021-114408
PATENT LITERATURE 2: International Publication No. 2018/043671

SUMMARY

However, investigation by the present inventors has found that measurement values of the particle fracture strength vary depending on an atmosphere during the measurement even when the identical sample is measured. Patent Literatures 1 and 2 do not describe the variation of the measurement values and a reduction method thereof, and still have room for improvement in order to measure the more accurate particle fracture strength.

An object of the present disclosure is to provide a measuring method and a measuring device that enable to reduce the variation of the measurement values of the particle fracture strength of the positive electrode active material for a non-aqueous electrolyte secondary battery.

A method for measuring a particle fracture strength of a positive electrode active material for a non-aqueous electrolyte secondary battery of an aspect of the present disclosure is a method in which a particle fracture strength of a positive electrode active material is measured in an atmosphere with a dewpoint maintained at less than or equal to 0°C.

A device for measuring a particle fracture strength of a positive electrode active material for a non-aqueous electrolyte secondary battery of an aspect of the present disclosure comprises a mechanism of measuring a particle fracture strength of a positive electrode active material in a state where a dewpoint of a sample exposure region is maintained at less than or equal to 0°C.

According to the method for measuring a particle fracture strength of a positive electrode active material for a non-aqueous electrolyte secondary battery of an aspect of the present disclosure, the variation of the measurement values may be reduced. In addition, using the device for measuring a particle fracture strength of a positive electrode active material for a non-aqueous electrolyte secondary battery of an aspect of the present disclosure may perform the above measuring method.

BRIEF DESCRIPTION OF DRAWING

FIG. 1 is an outline view illustrating a configuration of a measuring device of an example of an embodiment.
FIG. 2 is a flowchart showing an example of a measuring method of an example of an embodiment.

DESCRIPTION OF EMBODIMENTS

A particle fracture strength of a positive electrode active material is commonly measured by using a commercially available hardness meter. However, since various measurement targets are intended with the commercially available hardness meter, which consequently causes insufficient detailed investigation on conditions for measuring the particle fracture strength of the positive electrode active material.

The present inventors have investigated the measurement conditions for the particle fracture strength of the positive electrode active material, and found that the measurement values of the particle fracture strength vary depending on an atmosphere during the measurement even when the identical sample is measured. The present inventors have made further investigation intensively, and consequently found that the variation of the measurement values may be reduced by measuring the particle fracture strength in an atmosphere with a dewpoint maintained at less than or equal to 0°C.

Hereinafter, embodiments of the present disclosure will be described with examples, but the present disclosure is not limited to the examples described below. In the following description, specific values and materials may be exemplified, but other values and materials may be applied as long as the effect of the present disclosure is obtained. The description "a numerical value A to a numerical value B" herein includes the value A and the value B, and can be replaced with "greater than or equal to a value A and less than or equal to a value B". When lower limits and upper limits of values about specific physical properties, conditions, and the like are exemplified in the following description, any of the exemplified lower limits and any of the exemplified upper limits may be freely combined unless the lower limit is greater than or equal to the upper limit.

The positive electrode active material as a measurement target includes a lithium-transition metal composite oxide, for example. The lithium-transition metal composite oxide contains Ni, for example. A content of Ni in the lithium-transition metal composite oxide may be greater than or equal to 60 mol%, may be greater than or equal to 80 mol%, and may be greater than or equal to 90 mol% relative to a total number of moles of metal elements other than Li in the lithium-transition metal composite oxide. The content of Ni is preferably less than or equal to 98 mol% from the viewpoint of stabilization of the structure. The positive electrode active material such as the lithium-transition metal composite oxide easily absorbs moisture in the atmosphere to elute an alkali component such as Li. The eluted alkali component changes the surface state of the particles, thereby causing the variation in the measurement of the particle fracture strength. This tendency becomes more considerable as the content of Ni in the positive electrode active material is higher, and thus, measuring the particle fracture strength in the atmosphere with a dewpoint maintained at less than or equal to 0°C is effective for reducing the variation of the measurement values.

The lithium-transition metal composite oxide may be, for example, a composite oxide represented by a general formula $Li_aNi_xM1_yM2_zO_{2-b}$ (in the formula, $0.95 \leq a \leq 1.2$, $0.6 \leq x \leq 0.98$, $0 \leq y \leq 0.4$, $0 \leq z \leq 0.1$, $0 \leq b \leq 0.05$, $x+y+z=1$, M1 includes at least one element selected from Co, Al, and Mn, and M2 includes at least one element selected from Fe, Ti, Si, Nb, Zr, Mo, W, and Zn). Note that the positive electrode active material may include a lithium-transition metal composite oxide other than the composite oxide represented by the above general formula or other compounds within a range not impairing the object of the present disclosure. The mole fraction of the metal elements contained in the entire particles of the lithium-transition metal composite oxide may be measured by inductively coupled plasma (ICP) emission spectroscopy.

The lithium-transition metal composite oxide may have a layered structure. Example of the layered structure of the lithium-transition metal composite oxide include a layered structure belonging to the space group R-3m and a layered structure belonging to the space group C2/m. The lithium-transition metal composite oxide preferably has the layered structure belonging to the space group R-3m from the viewpoints of increase in the capacity and the stability of the crystal structure. The layered structure of the lithium-transition metal composite oxide may include a transition metal layer, a Li layer, and an oxygen layer.

The lithium-transition metal composite oxide may include secondary particles each formed by aggregation of primary particles. A particle diameter of the primary particles is, for example, greater than or equal to 0.02 μm and less than or equal to 2 μm. The particle diameter of the primary particles is measured as a diameter of a circumscribed circle in a particle image observed with a scanning electron microscope (SEM). An average particle diameter of the secondary particles is, for example, greater than or equal to 2 μm and less than or equal to 30 μm. Here, the average particle diameter means a volume-based median diameter (D50). The D50 means a particle diameter at which a cumulative frequency is 50% from a smaller particle diameter side in a volume-based particle size distribution. The particle size distribution of the secondary particles may be measured by using a laser diffraction-type particle size distribution measuring device (for example, MT3000II, manufactured by MicrotracBEL Corp.) with water as a dispersion medium.

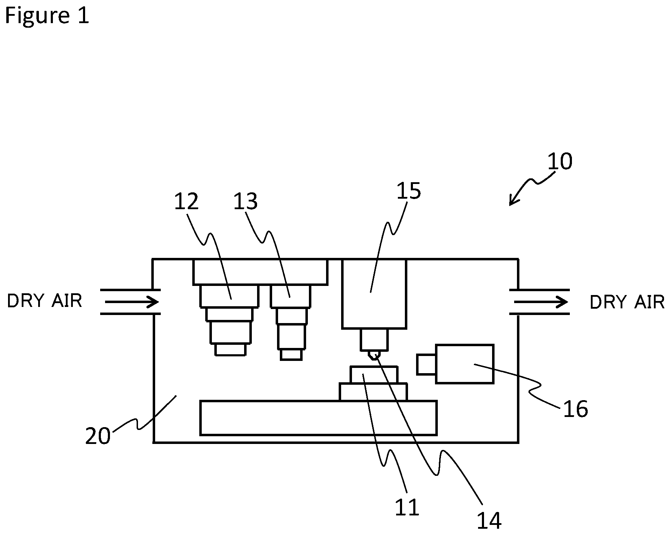

FIG. 1 is an outline view illustrating a configuration of a measuring device 10 of an example of an embodiment. The measuring device 10 comprises, as illustrated in FIG. 1, a movable sample stage 11, a low-magnification microscope 12, a high-magnification microscope 13, a hardness meter 15 having an indenter 14, and a camera 16, for example. The inside of the measuring device 10 is a sample exposure region 20, and the positive electrode active material as a sample is exposed in the sample exposure region 20.

The movable sample stage 11 is movable in a lateral direction in FIG. 1, and may move under the microscopes 12 and 13 and the hardness meter 15 while it mounts the particles of the positive electrode active material as a measurement target.

The low-magnification microscope 12 is used for focusing on the surfaces of the particles to be measured. The high-magnification microscope 13 is used for selecting the particle to be measured. Specifically, the sample stage 11 is adjusted so that the particle to be measured is positioned at the center of an observation field of the microscope 13, which may push the indenter 14 near the center of the particle.

The hardness meter 15 used may be a commercially available device. Examples of the commercially available device include a dynamic ultra-micro hardness meter DUH-211S, manufactured by Shimadzu Corporation. Also, as the indenter 14, an indenter attached to the commercially available device may be used. From a testing force-displacement diagram obtained by the test with the hardness meter 15, a pushing force of the indenter when the particle is broken may be determined.

The particle fracture strength may be calculated by the following formula (1). The particle fracture strengths may be measured on a plurality of particles of the positive electrode active material to specify an average value thereof as the particle fracture strength of the positive electrode active material. For example, greater than or equal to 10 and less than or equal to 30 particles of the positive electrode active material may be measured to calculate the particle fracture strength.

[Formula 1]

$$\sigma_{\mathrm{F}} = \alpha_H \frac{F_F}{\pi d^2} \qquad (1)$$

$\sigma_{\mathrm{F}}$: Particle fracture strength (Pa)
$\alpha_{\mathrm{H}}$: Coefficient (=2.8)
$F_{\mathrm{F}}$: Pushing force of indenter when particle is broken (N)
$d$: Particle diameter (m)

The camera 16 is used for observing process of the particle broken with the hardness meter 15, for example. A type of the camera 16 is not particularly limited, and may be a CCD camera or may be a CMOS camera, for example.

The measuring device 10 has a mechanism such that the particle fracture strength of the positive electrode active material is measured in the state where a dewpoint of the sample exposure region 20 is maintained at less than or equal to 0°C. In other words, the atmosphere inside the measuring device 10 is maintained such that the dewpoint is less than or equal to 0°C. This configuration may reduce an effect of moisture in the atmosphere on the particle fracture strength to reduce the variation of the measurement values.

For example, as illustrated in FIG. 1, the particle fracture strength of the positive electrode active material may be measured in the atmosphere with the dewpoint maintained at less than or equal to 0°C by providing an inlet and an outlet for dry air on the measuring device 10 to flow the dry air inside the measuring device 10. A temperature of the sample exposure region 20 is not particularly limited, and is a room temperature, for example, and more specifically 23°C±5°C.

The particle fracture strength of the positive electrode active material is preferably measured in an atmosphere with the dewpoint maintained at less than or equal to -10°C, more preferably measured in an atmosphere with the dewpoint maintained at less than or equal to -20°C, and particularly preferably measured in an atmosphere with the dewpoint maintained at less than or equal to -30°C. The investigation by the present inventors has found that a higher dewpoint of the atmosphere tends to cause a lower particle fracture strength. A high dewpoint of the atmosphere causes the surfaces of the primary particles constituting the positive electrode active material to have a wet state, and slipping easily occurs between the primary particles. Thus, it is considered that the particle fracture strength becomes low. Since the lower dewpoint temperature more stabilizes the surface state of the particles, the variation of the measurement values of the particle fracture strength may be reduced.

The particle fracture strength of the positive electrode active material is preferably measured in an atmosphere with the dewpoint maintained constant. Here, the atmosphere with the dewpoint maintained constant means an atmosphere in which an average value of the dewpoint is maintained within a range of ±2°C. Note that the atmosphere with the dewpoint maintained at less than or equal to 0°C means an atmosphere in which an average value of the dewpoint is maintained at less than or equal to 0°C.

The particle fracture strength of the positive electrode active material is preferably measured in an atmosphere with the dewpoint maintained constant at less than or equal to -10°C, more preferably measured in an atmosphere with the dewpoint maintained constant at less than or equal to -20°C, and particularly preferably measured in an atmosphere with the dewpoint maintained constant at less than or equal to -30°C.

A particle diameter of the positive electrode active material used for measuring the particle fracture strength is preferably even. This may more reduce the variation of the measurement values of the particle fracture strength. Here, the "particle diameter of the positive electrode active material is even" means that the particle diameter of the positive electrode active material is within a range of the average particle diameter (D50) $\pm 0.5$ $\mu$m.

As the positive electrode active material, particles having narrow particle size distribution and particles having wide particle size distribution are used according to the purpose. When these positive electrode active materials are used for the battery, the particles having narrow particle size distribution or the particles having wide particle size distribution may be used singly, or a plurality of types of particles having different particle size distribution may be mixed for use. When measuring the particle fracture strength of a positive electrode active material having a single peak top as a measurement result of the particle size distribution, an average particle diameter is calculated from the particle size distribution, and particles having a particle diameter corresponding to the average particle diameter $\pm 0.5$ $\mu$m are used for the measurement. When measuring the particle fracture strength of a positive electrode active material having a plurality of peak tops as a measurement result of the particle size distribution, particles having a particle diameter $\pm 0.5$ $\mu$m are used for each measurement, the particle diameter being corresponding to each of the peak top positions in the particle size distribution.

The particle diameter of the positive electrode active material used for measuring the particle fracture strength is preferably greater than or equal to 3 $\mu$m. This reduces an effect in a case if the indenter is shifted from the center of the particle, and thus, the variation of the measurement values may be reduced.

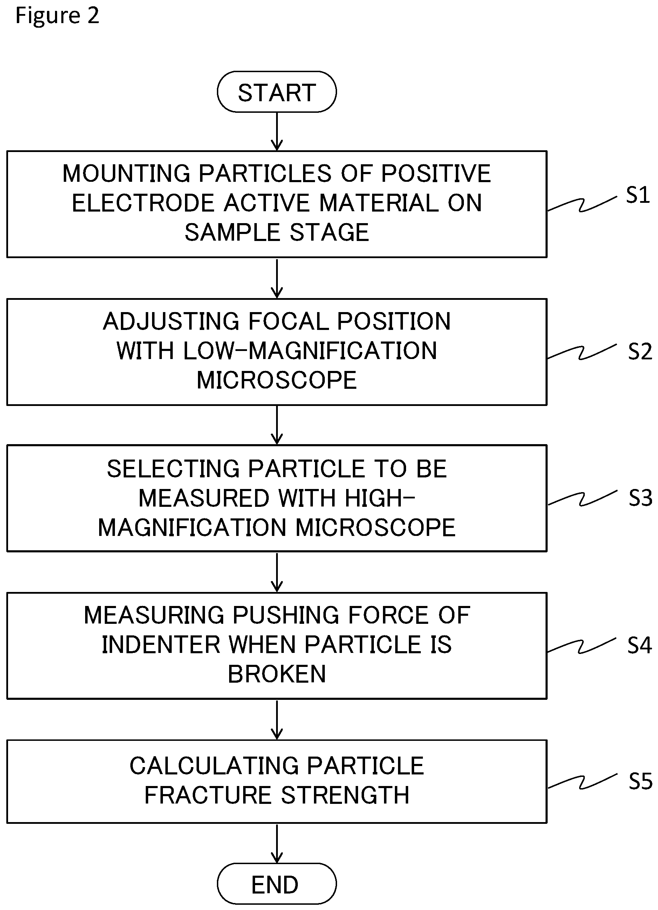

Next, a method for measuring the particle fracture strength of the positive electrode active material will be described with reference to FIG. 2. FIG. 2 is a flowchart showing an example of the measuring method of an example of an embodiment.

First, a laminate sealing the particles of the positive electrode active material is opened in the sample exposure region 20, and the particles of the positive electrode active material is mounted on the sample stage 11 (S1).

The particles of the positive electrode active material mounted on the sample stage 11 are observed with the low-magnification microscope 12 to adjust a focal position so as to focus on the particle surfaces (S2). Then, a particle to be measured is selected by using the high-magnification microscope 13 (S3). In this time, the position of the sample stage 11 is adjusted so that the indenter 14 is pushed near the center of the particle.

The sample stage 11 is moved to a position below the hardness meter, the indenter 14 is pushed into the particle while observing the particle with the camera 16, and a pushing force of the indenter 14 when the particle is broken is measured (S4).

The above method for calculating the fracture strength is used to calculate the particle fracture strength (S5), and this flow is finished. When a fracture strength of another particle is subsequently measured, the flow of S2 to S5 is executed again.

EXAMPLES

Hereinafter, the present disclosure will be further described with Examples and Comparative Examples, but the present disclosure is not limited to the following Examples.

<Example 1-1>

By using the measuring device illustrated in FIG. 1, measurement was performed in a state where the temperature of the sample exposure region was maintained constant at 25°C and the dewpoint thereof was maintained constant at -5°C. As the hardness meter, a dynamic ultra-micro hardness meter DUH-211S, manufactured by Shimadzu Corporation, was used. In the sample exposure region, a laminate sealing particles of a lithium-transition metal composite oxide represented by a general formula $LiNi_{0.6}Co_{0.2}Mn_{0.2}O_2$ was opened, and a particle fracture strength of the lithium-transition metal composite oxide was measured. The measurement was performed on 10 particles having a particle diameter within a range of the average particle diameter (D50) $\pm 0.5$ $\mu$m, and an average value of the measurement results was calculated and specified as the particle fracture strength. Note that all the particles of the lithium-transition metal composite oxide used for the measurement had a particle diameter of greater than or equal to 3 $\mu$m.

The above measurement was performed once a month from August to February. From values of the particle fracture strengths obtained in the months (seven in total), the standard deviation was calculated.

<Example 1-2>

A standard deviation was calculated in the same manner as in Example 1-1 except that the dewpoint of the sample exposure region was kept constant at -15°C.

<Example 1-3>

A standard deviation was calculated in the same manner as in Example 1-1 except that the dewpoint of the sample exposure region was kept constant at -25°C.

<Example 1-4>

A standard deviation was calculated in the same manner as in Example 1-1 except that the dewpoint of the sample exposure region was kept constant at -35°C.

<Example 1-5>

A standard deviation was calculated from the total 28 measurement results obtained in Examples 1-1 to 1-4. That is, shown is a standard deviation in a case where the dewpoint of the sample exposure region is not constant but changed within the range of less than or equal to -5°C and greater than or equal to -35°C.

<Comparative Example 1>

A standard deviation was calculated in the same manner as in Example 1-1 except that the atmosphere of the sample exposure region was not controlled, and the measurement was performed in air. In the measurement period, the dewpoint of the sample exposure region varied within a range of greater than or equal to 6°C and less than or equal to 16°C.

<Examples 2-1 to 2-5 and Comparative Example 2>

A standard deviation was calculated in the same manner as in the corresponding Examples 1-1 to 1-5 and Comparative Example 1, respectively, except that the composition of the lithium-transition metal composite oxide as the sample was changed to $LiNi_{0.8}Co_{0.1}Mn_{0.1}O_2$.

<Examples 3-1 to 3-5 and Comparative Example 3>

A standard deviation was calculated in the same manner as in the corresponding Examples 1-1 to 1-5 and Comparative Example 1, respectively, except that the composition of the lithium-transition metal composite oxide as the sample was changed to $LiNi_{0.9}Co_{0.05}Mn_{0.05}O_2$.

Table 1 to Table 3 separately show the evaluation results of the test cells of Examples and Comparative Examples. In each Table, values of the standard deviation of Examples are shown relative to the value of 1 defined as the standard deviation of Comparative Example.

[Table 1]

|  | Measurement atmosphere | Standard deviation |
|---|---|---|
| Example 1-1 | Dewpoint -5°C constant | 0.64 |
| Example 1-2 | Dewpoint -15°C constant | 0.55 |
| Example 1-3 | Dewpoint -25°C constant | 0.46 |
| Example 1-4 | Dewpoint -35°C constant | 0.45 |
| Example 1-5 | Dewpoint -5°C~-35°C | 0.71 |
| Comparative Example 1 | Dewpoint 6~16°C | 1 |

[Table 2]

|  | Measurement atmosphere | Standard deviation |
|---|---|---|
| Example 2-1 | Dewpoint -5°C constant | 0.51 |
| Example 2-2 | Dewpoint -15°C constant | 0.42 |
| Example 2-3 | Dewpoint -25°C constant | 0.41 |
| Example 2-4 | Dewpoint -35°C constant | 0.39 |

(continued)

|  | Measurement atmosphere | Standard deviation |
|---|---|---|
| Example 2-5 | Dewpoint -5°C~-35°C | 0.59 |
| Comparative Example 2 | Dewpoint 6~16°C | 1 |

[Table 3]

|  | Measurement atmosphere | Standard deviation |
|---|---|---|
| Example 3-1 | Dewpoint -5°C constant | 0.40 |
| Example 3-2 | Dewpoint -15°C constant | 0.32 |
| Example 3-3 | Dewpoint -25°C constant | 0.31 |
| Example 3-4 | Dewpoint -35°C constant | 0.28 |
| Example 3-5 | Dewpoint -5°C~-35°C | 0.63 |
| Comparative Example 3 | Dewpoint 6~16°C | 1 |

In all Table 1 to Table 3, the variation of the measurement values was reduced in Examples in which the particle fracture strength of the positive electrode active material was measured in the atmosphere with the dewpoint maintained at less than or equal to 0°C as compared with the Comparative Examples in which the atmosphere was not controlled. Among Examples, the case where the dewpoint was kept constant (for example, Examples 1-1 to 1-4) reduced the variation of the measurement values as compared with the case where the dewpoint was not kept constant (for example, Example 1-5). Further, among Examples in which the dewpoint was kept constant, the variation was more reduced with the lower dewpoint. By comparison between the results in Table 1 to Table 3, it was found that the improvement in the variation with the lowered dewpoint tended to be more remarkable with the higher content of Ni.

The present disclosure will be further described with the following embodiments.

Constitution 1:

A method for measuring a particle fracture strength of a positive electrode active material for a non-aqueous electrolyte secondary battery, wherein the particle fracture strength of the positive electrode active material is measured in an atmosphere with a dewpoint maintained at less than or equal to 0°C.

Constitution 2:

The method for measuring a particle fracture strength of a positive electrode active material for a non-aqueous electrolyte secondary battery according to Constitution 1, wherein the particle fracture strength is measured in an atmosphere with the dewpoint maintained constant.

Constitution 3:

The method for measuring a particle fracture strength of a positive electrode active material for a non-aqueous electrolyte secondary battery according to Constitution 1 or 2, wherein the particle fracture strength is measured in an atmosphere with the dewpoint maintained at less than or equal to -10°C.

Constitution 4:

The method for measuring a particle fracture strength of a positive electrode active material for a non-aqueous electrolyte secondary battery according to Constitution 1 or 2, wherein the particle fracture strength is measured in an atmosphere with the dewpoint maintained at less than or equal to -20°C.

Constitution 5:

The method for measuring a particle fracture strength of a positive electrode active material for a non-aqueous electrolyte secondary battery according to Constitution 1 or 2, wherein the particle fracture strength is measured in an atmosphere with the dewpoint maintained at less than or equal to -30°C.

Constitution 6:

The method for measuring a particle fracture strength of a positive electrode active material for a non-aqueous electrolyte secondary battery according to any one of Constitutions 1 to 5, wherein the positive electrode active material includes a lithium-transition metal composite oxide.

Constitution 7:

The method for measuring a particle fracture strength of a positive electrode active material for a non-aqueous electrolyte secondary battery according to Constitution 6, wherein a content of Ni in the lithium-transition metal composite oxide is greater than or equal to 60 mol% relative to a total number of moles of metal elements other than Li in the lithium-transition metal composite oxide.

Constitution 8:

The method for measuring a particle fracture strength of a positive electrode active material for a non-aqueous electrolyte secondary battery according to Constitution 6, wherein a content of Ni in the lithium-transition metal composite oxide is greater than or equal to 80 mol% relative to a total number of moles of metal elements other than Li in the lithium-transition metal composite oxide.

Constitution 9:

The method for measuring a particle fracture strength of a positive electrode active material for a non-aqueous electrolyte secondary battery according to Constitution 6, wherein a content of Ni in the lithium-transition metal composite oxide is greater than or equal to 90 mol% relative to a total number of moles of metal elements other than Li in the lithium-transition metal composite oxide.

Constitution 10:

The method for measuring a particle fracture strength of a positive electrode active material for a non-aqueous electrolyte secondary battery according to any one of Constitutions 1 to 9, wherein a particle diameter of the positive electrode active material is even.

Constitution 11:

The method for measuring a particle fracture strength of a positive electrode active material for a non-aqueous electrolyte secondary battery according to any one of Constitutions 1 to 10, wherein a particle diameter of the positive electrode active material is greater than or equal to 3 $\mu$m.

Constitution 12:

A device for measuring a particle fracture strength of a positive electrode active material for a non-aqueous electrolyte secondary battery, the device comprising a mechanism of measuring the particle fracture strength of the positive electrode active material in a state where a dewpoint of a sample exposure region is maintained at less than or equal to 0°C.

REFERENCE SIGNS LIST

10 Measuring device, 11 Sample stage, 12 (Low-magnification) microscope, 13 (High-magnification) microscope, 14 Indenter, 15 Hardness meter, 16 Camera, 20 Sample exposure region

**Claims**

1. A method for measuring a particle fracture strength of a positive electrode active material for a non-aqueous electrolyte secondary battery, wherein the particle fracture strength of the positive electrode active material is measured in an atmosphere with a dewpoint maintained at less than or equal to 0°C.

2. The method for measuring a particle fracture strength of a positive electrode active material for a non-aqueous electrolyte secondary battery according to claim 1, wherein the particle fracture strength is measured in an atmosphere with the dewpoint maintained constant.

3. The method for measuring a particle fracture strength of a positive electrode active material for a non-aqueous electrolyte secondary battery according to claim 1, wherein the particle fracture strength is measured in an atmosphere with the dewpoint maintained at less than or equal to -10°C.

4. The method for measuring a particle fracture strength of a positive electrode active material for a non-aqueous electrolyte secondary battery according to claim 1, wherein the particle fracture strength is measured in an atmosphere with the dewpoint maintained at less than or equal to -20°C.

5. The method for measuring a particle fracture strength of a positive electrode active material for a non-aqueous electrolyte secondary battery according to claim 1, wherein the particle fracture strength is measured in an atmosphere with the dewpoint maintained at less than or equal to -30°C.

6. The method for measuring a particle fracture strength of a positive electrode active material for a non-aqueous electrolyte secondary battery according to claim 1, wherein the positive electrode active material includes a lithium-transition metal composite oxide.

7. The method for measuring a particle fracture strength of a positive electrode active material for a non-aqueous electrolyte secondary battery according to claim 6, wherein a content of Ni in the lithium-transition metal composite oxide is greater than or equal to 60 mol% relative to a total number of moles of metal elements other than Li in the lithium-transition metal composite oxide.

8. The method for measuring a particle fracture strength of a positive electrode active material for a non-aqueous electrolyte secondary battery according to claim 6, wherein a content of Ni in the lithium-transition metal composite oxide is greater than or equal to 80 mol% relative to a total number of moles of metal elements other than Li in the lithium-transition metal composite oxide.

9. The method for measuring a particle fracture strength of a positive electrode active material for a non-aqueous electrolyte secondary battery according to claim 6, wherein a content of Ni in the lithium-transition metal composite oxide is greater than or equal to 90 mol% relative to a total number of moles of metal elements other than Li in the lithium-transition metal composite oxide.

10. The method for measuring a particle fracture strength of a positive electrode active material for a non-aqueous electrolyte secondary battery according to claim 1, wherein a particle diameter of the positive electrode active material is even.

11. The method for measuring a particle fracture strength of a positive electrode active material for a non-aqueous electrolyte secondary battery according to claim 1, wherein a particle diameter of the positive electrode active material is greater than or equal to 3 $\mu$m.

12. A device for measuring a particle fracture strength of a positive electrode active material for a non-aqueous electrolyte secondary battery, the device comprising a mechanism of measuring the particle fracture strength of the positive electrode active material in a state where a dewpoint of a sample exposure region is maintained at less than or equal to 0°C.

Figure 1

Figure 2

```
        ┌──────────────┐
        │    START     │
        └──────┬───────┘
               │
               ▼
   ┌───────────────────────────┐
   │ MOUNTING PARTICLES OF POSITIVE │       S1
   │ ELECTRODE ACTIVE MATERIAL ON   │
   │      SAMPLE STAGE              │
   └───────────┬───────────────┘
               │
               ▼
   ┌───────────────────────────┐
   │   ADJUSTING FOCAL POSITION     │       S2
   │    WITH LOW-MAGNIFICATION      │
   │         MICROSCOPE             │
   └───────────┬───────────────┘
               │
               ▼
   ┌───────────────────────────┐
   │    SELECTING PARTICLE TO BE    │       S3
   │     MEASURED WITH HIGH-        │
   │   MAGNIFICATION MICROSCOPE     │
   └───────────┬───────────────┘
               │
               ▼
   ┌───────────────────────────┐
   │  MEASURING PUSHING FORCE OF    │       S4
   │   INDENTER WHEN PARTICLE IS    │
   │          BROKEN                │
   └───────────┬───────────────┘
               │
               ▼
   ┌───────────────────────────┐
   │    CALCULATING PARTICLE        │       S5
   │    FRACTURE STRENGTH           │
   └───────────┬───────────────┘
               │
               ▼
        ┌──────────────┐
        │     END      │
        └──────────────┘
```

## INTERNATIONAL SEARCH REPORT

| International application No. |
| --- |
| **PCT/JP2024/026080** |

| A. | CLASSIFICATION OF SUBJECT MATTER |
| --- | --- |

*H01M 4/525*(2010.01)i
FI: H01M4/525

According to International Patent Classification (IPC) or to both national classification and IPC

| B. | FIELDS SEARCHED |
| --- | --- |

Minimum documentation searched (classification system followed by classification symbols)

H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2022-177291 A (SUMITOMO METAL MINING CO., LTD.) 30 November 2022 (2022-11-30)<br>examples | 1-12 |
| A | JP 2004-335152 A (SUMITOMO METAL MINING CO., LTD.) 25 November 2004 (2004-11-25)<br>examples | 1-12 |
| A | WO 2018/003929 A1 (UBE INDUSTRIES, LTD.) 04 January 2018 (2018-01-04)<br>claims | 1-12 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 September 2024** | **08 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/026080**

| Patent document cited in search report | | | Publication date (day/month/year) | Patent family member(s) | | | Publication date (day/month/year) |
|---|---|---|---|---|---|---|---|
| JP | 2022-177291 | A | 30 November 2022 | (Family: none) | | | |
| JP | 2004-335152 | A | 25 November 2004 | (Family: none) | | | |
| WO | 2018/003929 | A1 | 04 January 2018 | US | 2020/0006761 | A1 | |
| | | | | claims | | | |
| | | | | EP | 3480873 | A1 | |

Form PCT/ISA/210 (patent family annex) (July 2022)

13

## EP 4 756 921 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021114408 A